# DEMANDE DE BREVET EUROPEEN

(11) **EP 4 807 889 A1**
(43) Date de publication de la demande: **16.09.2026**
(21) Numéro de dépôt: 26164671.5
(22) Date de dépôt: 13.03.2026
(51) Int. Cl.: H01M 50/538, H01M 10/04, H01M 50/54

(54) **ELÉMENT ÉLECTROCHIMIQUE À CAPACITÉ ÉLECTROCHIMIQUE SCINDÉE ET BATTERIE ASSOCIÉE**

(30) Priorité: 14.03.2025 FR 2502553
(71) Demandeur: SAFT, 92300 Levallois-Perret (FR)
(72) Inventeur: ADAMCZYK, Evan, 35000 RENNES (FR); ANTITOMASO, PHILIPPE, 33000 BORDEAUX (FR); AUGUIN, Florian, 33770 SALLES (FR); DUMONT, Erwan, 33440 AMBARES ET LAGRAVE (FR); MOREY, JULIEN, 33000 BORDEAUX (FR)
(74) Mandataire: Lavoix

(57) **Abrégé**

L'élément électrochimique comprend un faisceau électrochimique (22) comportant un empilement électrochimique (26), l'empilement électrochimique (26) comprenant N électrodes de première polarité et N électrodes de deuxième polarité alternativement empilées et séparées par 2N séparateurs.

Le faisceau électrochimique (22) comprend N bornes de connexion électrique de première polarité (90) et N bornes de connexion électrique de deuxième polarité (92) et pour k un entier naturel allant de 1 à N :
- une k-ième borne de connexion électrique de première polarité (90) est formée par une k-ième languette de connexion électrique de première polarité de la k-ième électrode plane de première polarité de l'empilement électrochimique (26) ;
- une k-ième borne de connexion électrique de deuxième polarité (92) est formée par une k-ième languette de connexion électrique de deuxième polarité de la k-ième électrode plane de deuxième polarité de l'empilement électrochimique (26).

## Description

La présente invention concerne un élément électrochimique comprenant un faisceau électrochimique,
le faisceau électrochimique comportant au moins un empilement électrochimique s'étendant au moins localement selon une direction d'empilement,
l'au moins un empilement électrochimique comprenant :
   - N électrodes d'une première polarité, sous forme de premières feuilles, s'étendant chacune au moins localement parallèlement à un plan d'empilement sensiblement orthogonal à la direction d'empilement et comportant chacune une languette de connexion électrique de première polarité ;
   - N électrodes d'une deuxième polarité opposée à la première polarité, sous forme de deuxièmes feuilles, s'étendant chacune au moins localement parallèlement au plan d'empilement et comportant chacune une languette de connexion électrique de deuxième polarité ;
   - 2N séparateurs ;
N étant un entier naturel,
l'au moins un empilement électrochimique étant tel que :
   - pour i un entier naturel allant de 1 à N-1 :
      - une i-ième électrode plane de deuxième polarité est empilée sur une i-ième électrode plane de première polarité selon la direction d'empilement, un séparateur étant intercalé entre l'i-ème électrode plane de première polarité et l'i-ième électrode plane de deuxième polarité ;
      - une i+1-ième électrode plane de première polarité est empilée sur l'i-ième électrode plane de deuxième polarité selon la direction d'empilement, un séparateur étant intercalé entre l'i-ème électrode plane de deuxième polarité et l'i+1-ième électrode plane de première polarité ;
   - une N-ième électrode plane de deuxième polarité est empilée sur la N-ième électrode plane de première polarité selon la direction d'empilement, un séparateur étant intercalé entre la N-ième électrode plane de première polarité et la N-ième électrode plane de deuxième polarité.

Généralement, dans un tel élément électrochimique, les électrodes, disposées dans un conteneur, sont connectées électriquement à des bornes de sortie de courant qui assurent une continuité électrique entre les électrodes. Les bornes de sortie de courant sont connectées électriquement à un consommateur électrique afin de l'alimenter en énergie électrique.

Dans un élément électrochimique classique de ce type, le faisceau électrochimique comprend une seule borne de connexion électrique de première polarité et une seule borne de connexion électrique de deuxième polarité. L'ensemble des languettes de connexion électrique de première polarité sont mises en parallèles pour former l'unique borne de connexion électrique de première polarité et l'ensemble des languettes de connexion électrique de deuxième polarité sont mises en parallèles pour former l'unique borne de connexion électrique de deuxième polarité.

Toutefois, dans un tel élément électrochimique, lorsqu'un défaut impacte l'aspect électrique ou électrochimique dudit élément électrochimique, c'est l'ensemble de l'élément électrochimique qui est compromis. La fiabilité et/ou la sécurité de l'élément électrochimique sont donc limitées.

Le but de l'invention est alors de proposer un élément électrochimique présentant une meilleure fiabilité et une meilleure sécurité.

A cet effet, l'invention a pour objet un élément électrochimique du type précité, dans lequel le faisceau électrochimique comprend :
- N bornes de connexion électrique de première polarité agencées le long d'un premier bord de l'au moins un empilement électrochimique ;
- N bornes de connexion électrique de deuxième polarité agencées le long d'un deuxième bord de l'au moins un empilement électrochimique ;
l'élément électrochimique étant tel que :
pour k un entier naturel allant de 1 à N :
- une k-ième borne de connexion électrique de première polarité est formée par une k-ième languette de connexion électrique de première polarité de la k-ième électrode plane de première polarité de l'au moins un empilement électrochimique ;
- une k-ième borne de connexion électrique de deuxième polarité est formée par une k-ième languette de connexion électrique de deuxième polarité de la k-ième électrode plane de deuxième polarité de l'au moins un empilement électrochimique.

Grâce à cette architecture, la quantité de charge électrique fournie par l'ensemble des réactions d'oxydo-réduction ayant lieu dans l'élément électrochimique correspond à la somme des quantités de charge électrique fournies par les ensembles des réactions d'oxydo-réduction répartis entre les N paires de bornes de connexion électrique de première polarité et de deuxième polarité.

Avec une telle architecture, un défaut impactant l'aspect électrique ou électrochimique entre une électrode de première polarité et une électrode de deuxième polarité et/ou entre une borne de connexion électrique de première polarité et une borne de connexion électrique de deuxième polarité présente un impact réduit, au moins dans l'immédiat, sur l'énergie électrochimique fournie par les ensembles de réactions d'oxydoréduction entre les autres électrodes de première polarité et les autres électrodes de deuxième polarité et/ou entre les autres bornes de connexion électrique de première polarité et les autres bornes de connexion électrique de deuxième polarité. La fiabilité et la sécurité de l'élément électrochimique en sont améliorées.

Suivant d'autres aspects avantageux de l'invention, l'élément électrochimique comprend une ou plusieurs des caractéristiques suivantes, prises isolément ou suivant toutes les combinaisons techniquement possibles :
- N est un entier naturel supérieur ou égal à 2 ;
- l'au moins un empilement électrochimique comprend 2N-1 groupes de capacité électrochimique, de sorte que pour j un entier naturel allant de 1 à N-1 :

- la j-ième électrode plane de première polarité et la j-ième électrode plane de deuxième polarité forment un groupe de capacité électrochimique ;
- la j-ième électrode plane de deuxième polarité et la j+1-ième électrode plane de première polarité forment un groupe de capacité électrochimique ;
   la N-ième électrode plane de première polarité et la N-ième électrode plane de deuxième polarité formant un groupe de capacité électrochimique ;
   la capacité électrochimique de l'au moins un empilement électrochimique correspondant à la somme des capacités électrochimiques des 2N-1 groupes de capacité électrochimiques ;
      - chaque groupe de capacité électrochimique est tel qu'un ensemble de réactions d'oxydo-réduction est destiné à avoir lieu entre les électrodes planes de première et deuxième polarités correspondantes dudit groupe de capacité électrochimique ;
      - l'élément électrochimique est du type prismatique ou pochette, le faisceau électrochimique s'étendant sensiblement selon le plan d'empilement ;
      - le faisceau électrochimique comprend M empilements électrochimiques, M étant un entier naturel, et
   dans lequel pour chaque empilement électrochimique, un séparateur est empilé sur la N-ième électrode plane de deuxième polarité dudit empilement électrochimique selon la direction d'empilement,
   l'élément électrochimique étant tel que pour p un entier naturel allant de 1 à M-1 :
      le p+1-ième empilement électrochimique est empilé sur le p-ième empilement électrochimique selon la direction d'empilement de sorte que la 1-ière électrode plane de première polarité du p+1-ième empilement électrochimique est empilée sur le séparateur qui est lui-même empilé sur la N-ième électrode plane de deuxième polarité du p-ième empilement électrochimique ;
      - les N bornes de connexion électrique de première polarité sont alignées successivement le long du premier bord de l'au moins un empilement électrochimique, les N bornes de connexion électrique de deuxième polarité étant alignées successivement le long du deuxième bord de l'au moins un empilement électrochimique, chaque languette de connexion électrique de première ou de deuxième polarité s'étendant en saillie depuis un collecteur de courant de l'électrode correspondante ;
      - pour q un entier naturel allant de 1 à N :
- la q-ième borne de connexion électrique de première polarité est formée par l'ensemble des q-ième languettes de connexion électrique de première polarité des q-ième électrodes planes de première polarité des M empilements électrochimiques ;
- la q-ième borne de connexion électrique de deuxième polarité est formée par l'ensemble des q-ième languettes de connexion électrique de deuxième polarité des q-ième électrodes planes de deuxième polarité des M empilements électrochimiques ;
   - pour chaque borne de connexion électrique de première ou de deuxième polarité, les languettes correspondant à ladite borne de connexion électrique de première ou de deuxième polarité sont soudées les unes aux autres pour former ladite borne de connexion électrique de première ou de deuxième polarité ;
   - l'élément électrochimique est du type cylindrique, l'élément électrochimique s'étendant sensiblement selon un axe de cylindre, le faisceau électrochimique comprenant un unique empilement électrochimique enroulé en spirale autour de l'axe de cylindre ;
   - l'élément électrochimique est tel que :
- chaque languette de connexion électrique de première polarité est formée par un premier bord d'un collecteur de courant de l'électrode de première polarité correspondante, agencée le long du premier bord de l'empilement électrochimique ;
- chaque languette de connexion électrique de deuxième polarité est formée par un deuxième bord d'un collecteur de courant de l'électrode de deuxième polarité correspondante, agencée le long du deuxième bord de l'empilement électrochimique ;
   - les N bornes de connexion électrique de première polarité sont agencées à une première extrémité axiale de l'élément électrochimique, les N bornes de connexion électrique de deuxième polarité étant agencées à une deuxième extrémité axiale de l'élément électrochimique, opposée à la première extrémité axiale ;
   - l'élément électrochimique est tel que :
- chaque borne de connexion électrique de première polarité est reliée électriquement à la(aux) borne(s) de connexion électrique de première polarité voisine(s) par une première résistance ;
- chaque borne de connexion électrique de deuxième polarité est reliée électriquement à la(aux) borne(s) de connexion électrique de deuxième polarité voisine(s) par une deuxième résistance ;
   - l'élément électrochimique comprend un conteneur délimitant un volume interne dans lequel le faisceau électrochimique est reçu, l'élément électrochimique comprenant en outre un électrolyte contenu dans le volume interne ;
   - l'électrolyte est solide.

L'invention concerne en outre une batterie comprenant au moins un élément électrochimique tel que décrit précédemment.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique simplifiée d'une batterie selon l'invention ;
[Fig. 2] la figure 2 est une représentation schématique simplifiée en perspective, partiellement en éclatée, d'un faisceau électrochimique d'un élément électrochimique selon un premier mode de réalisation de l'invention ;
[Fig. 3] la figure 3 est une représentation schématique simplifiée en perspective du faisceau électrochimique de la figure 2 ;
[Fig. 4] la figure 4 est une représentation schématique simplifiée en coupe d'une portion de l'élément électrochimique comprenant le faisceau électrochimique de la figure 2 ;
[Fig. 5] la figure 5 est une représentation schématique simplifiée en vue de dessus du faisceau électrochimique de la figure 2 ;
[Fig. 6] la figure 6 est une représentation schématique simplifiée d'une vue de dessus du faisceau électrochimique de la figure 2 et d'un circuit électrique correspondant audit faisceau électrochimique ;
[Fig. 7] la figure 7 est une représentation schématique simplifiée en coupe d'une portion du faisceau électrochimique de la figure 2 lorsqu'un court-circuit a lieu entre une borne de connexion électrique de première polarité et une borne de connexion électrique de deuxième polarité ;
[Fig. 8] la figure 8 est une représentation schématique simplifiée d'un élément électrochimique selon un deuxième mode de réalisation de l'invention, dans laquelle une vue est une coupe du faisceau électrochimique de l'élément électrochimique et deux vues sont des vues en perspective dudit élément électrochimique ;
[Fig. 9] la figure 9 est une représentation graphique de l'évolution de la tension de l'élément électrochimique et de la tension entre une borne de connexion électrique de première polarité et une borne de connexion électrique de deuxième polarité subissant un court-circuit en fonction du temps ; et
[Fig. 10] la figure 10 est une représentation schématique simplifiée d'un exemple de batterie selon l'invention.

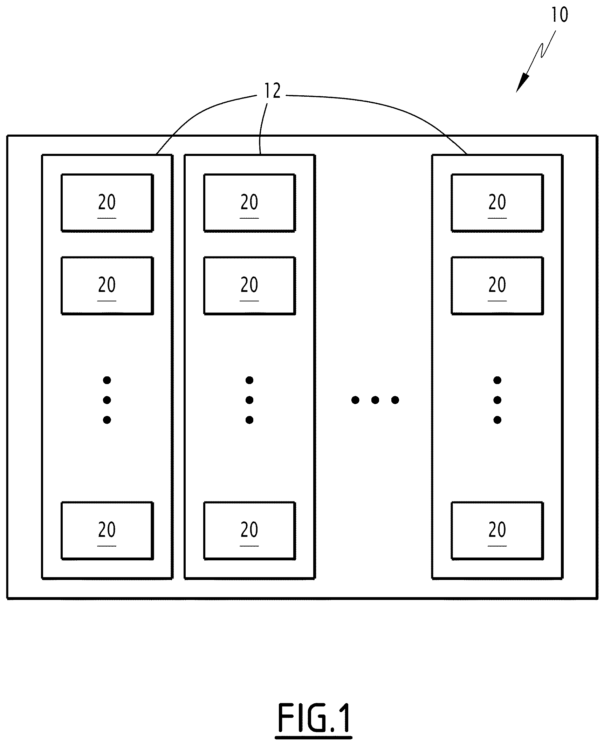

En référence aux figures 1 à 8, on décrit une batterie 10.

La batterie 10 comprend par exemple une pluralité de modules de batterie 12.

Chaque module de batterie 12 comprend au moins un élément électrochimique 20.

Dans ce qui suit, sauf lorsque le contraire est explicitement mentionné, on décrit un seul et unique élément électrochimique 20. Bien entendu, cette description s'applique à un ou plusieurs, voire la totalité, des éléments électrochimiques 20 des modules 12 ou de la batterie 10, le cas échéant.

En référence aux figures 1 à 7, on décrit un premier mode de réalisation de l'élément électrochimique 20 selon l'invention.

Selon ce premier mode de réalisation, l'élément électrochimique 20 est du type prismatique ou pochette (« *pouch* » en anglais).

L'élément électrochimique 20 comprend un faisceau électrochimique 22.

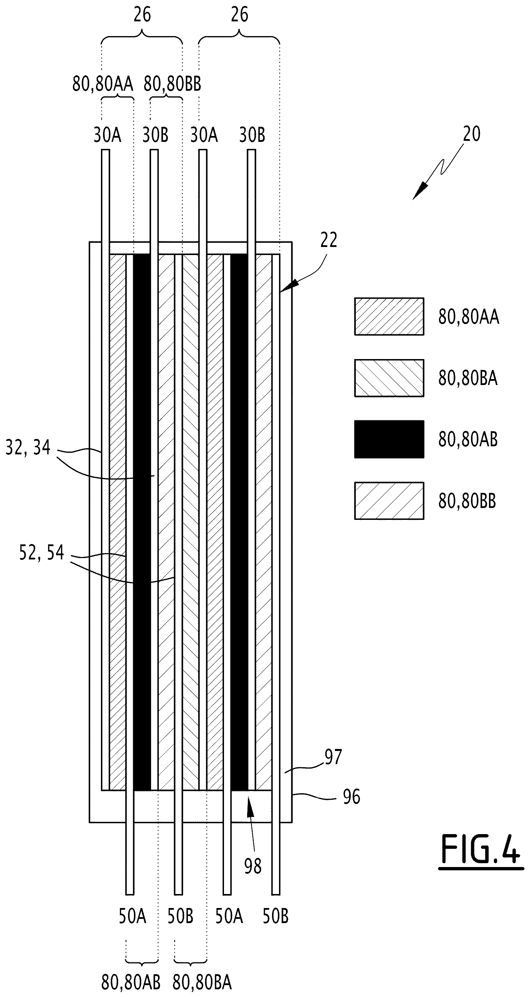

Avantageusement, comme illustré sur la figure 4, l'élément électrochimique 20 comprend en outre un conteneur 96 délimitant un volume interne 98 dans lequel le faisceau électrochimique 22 est reçu.

Encore avantageusement, l'élément électrochimique 20 comprend en outre un électrolyte 97 contenu dans le volume interne 98.

Selon le premier mode de réalisation, le faisceau électrochimique 22 s'étend sensiblement selon un plan d'empilement PE sensiblement orthogonal à une direction d'empilement DE.

Le faisceau électrochimique 22 comporte au moins un empilement électrochimique 26 s'étendant au moins localement selon la direction d'empilement DE.

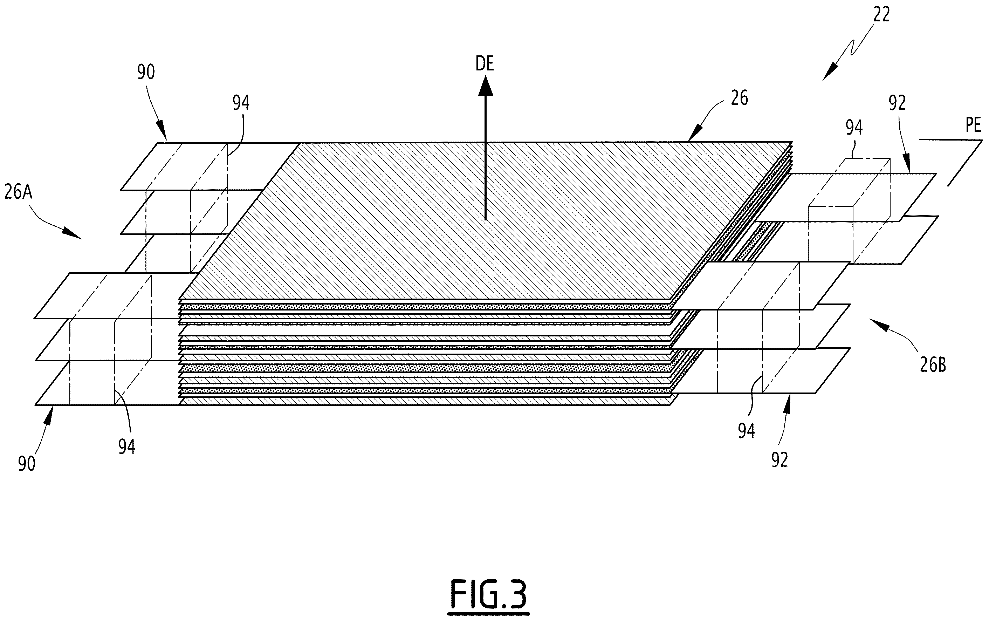

En référence aux figures 3 et 5 à 7, le faisceau électrochimique 22 comprend en outre :
- N bornes de connexion électrique de première polarité 90 agencées le long d'un premier bord 26A de l'au moins un empilement électrochimique 26 ;
- N bornes de connexion électrique de deuxième polarité 92 agencées le long d'un deuxième bord 26B de l'au moins un empilement électrochimique 26.

Par exemple, le deuxième bord 26B est identique au premier bord 26A.

En variante, le deuxième bord 26B est différent du premier bord 26A. Avantageusement, le deuxième bord 26B est opposé au premier bord 26A, notamment dans le plan d'empilement PE.

Selon le premier mode de réalisation, le faisceau électrochimique 22 comprend par exemple M empilements électrochimiques 26, M étant un entier naturel.

Par exemple, M est compris entre 1 et 20.

Dans ce qui suit, sauf lorsqu'explicitement mentionné autrement, on décrit un seul empilement électrochimique 26. Bien entendu, la description s'applique à chacun des empilements électrochimiques 26 lorsque le faisceau électrochimique 22 comprend une pluralité d'empilements électrochimiques 26.

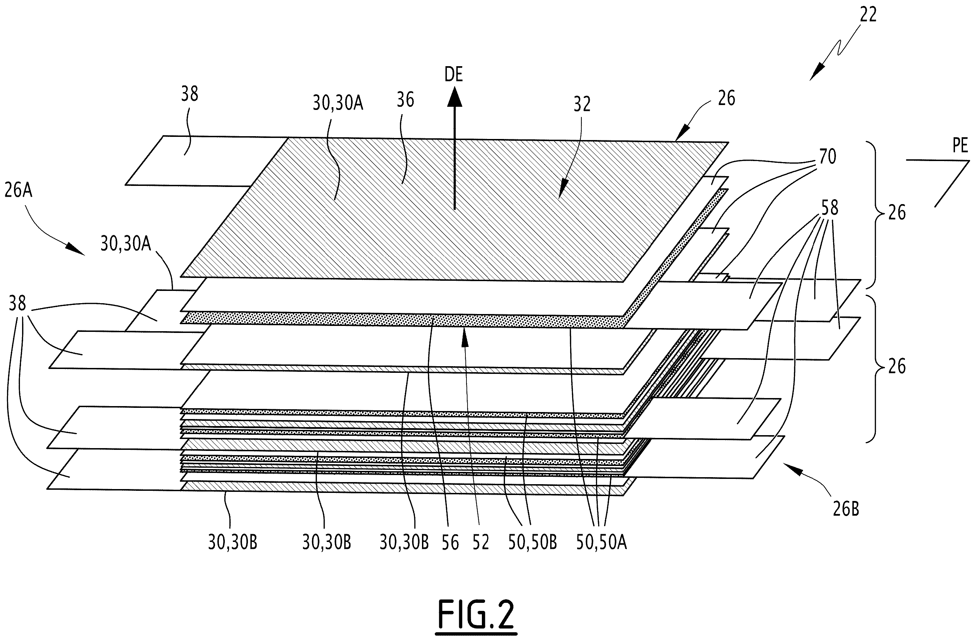

En référence aux figures 2 et 3, l'empilement électrochimique 26 comprend :
- N électrodes 30 d'une première polarité ;
- N électrodes 50 d'une deuxième polarité opposée à la première polarité ;
- 2N séparateurs 70.

N est un entier naturel. Par exemple, N est supérieur ou égal à 2. Par exemple, N est compris entre 1 et 10, de préférence entre 1 et 5.

Comme illustré sur les figures 2 et 3, chaque électrode de première polarité 30 comprend un premier collecteur de courant 32, s'étendant au moins localement parallèlement au plan d'empilement PE, et une languette de connexion électrique de première polarité 38.

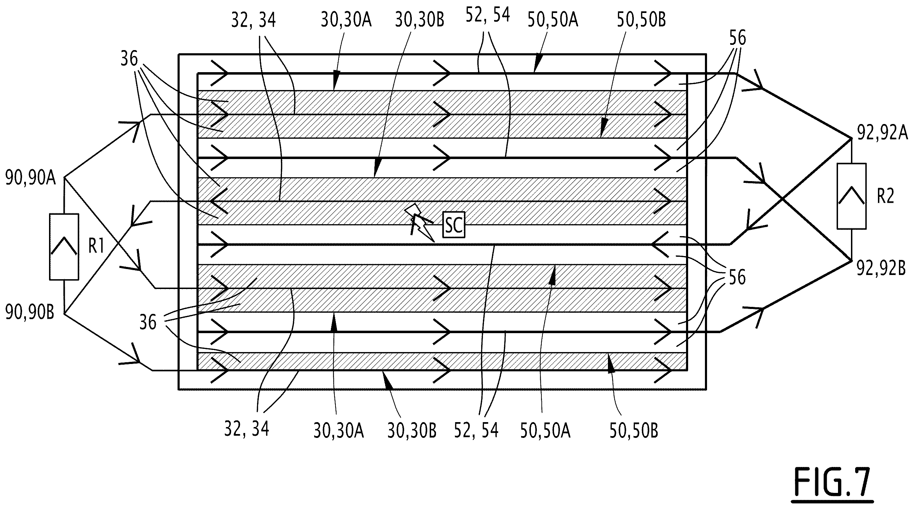

Avantageusement, en référence aux figures 4 et 7, le premier collecteur de courant 32 est un premier feuillard métallique 34 présentant deux faces opposées l'une à l'autre et sensiblement parallèles au plan d'empilement PE.

Encore avantageusement, en référence à la figure 7, chaque électrode de première polarité 30 comprend en outre deux premières couches électrochimiquement actives 36 recouvrant au moins partiellement les deux faces du premier feuillard métallique 34.

Avantageusement, chaque languette de connexion électrique de première polarité 38 s'étend en saillie depuis le collecteur de courant 32 de l'électrode de première polarité 30 correspondante, en particulier depuis un bord du collecteur de courant 32.

Encore avantageusement, chaque languette de connexion électrique de première polarité 38 est formée par le premier feuillard métallique 34 correspondant, dépourvu de première couche électrochimiquement active. En d'autres termes, aucune matériau électrochimique actif ne s'étend sur les surfaces externes des languettes de connexion électrique de première polarité 38.

Comme illustré sur les figures 2 et 3, chaque électrode de deuxième polarité 50 comprend un deuxième collecteur de courant 52, s'étendant au moins localement parallèlement au plan d'empilement PE et une languette de connexion électrique de deuxième polarité 58.

Avantageusement, en référence aux figures 4 et 7, le deuxième collecteur de courant 52 est un deuxième feuillard métallique 54 présentant deux faces opposées l'une à l'autre et sensiblement parallèles au plan d'empilement PE.

Encore avantageusement, en référence à la figure 7, chaque électrode de deuxième polarité 50 comprend en outre deux deuxièmes couches électrochimiquement actives 56 recouvrant au moins partiellement les deux faces du deuxième feuillard métallique 54.

Avantageusement, chaque languette de connexion électrique de deuxième polarité 58 s'étend en saillie depuis le collecteur de courant 52 de l'électrode de deuxième polarité 50 correspondante, en particulier depuis un bord du collecteur de courant 52.

Encore avantageusement, chaque languette de connexion électrique de deuxième polarité 58 est formée par le deuxième feuillard métallique 54 correspondant, dépourvu de deuxième couche électrochimiquement active. En d'autres termes, aucune matériau électrochimique actif ne s'étend sur les surfaces externes des languettes de connexion électrique de deuxième polarité 58.

En référence aux figures 2 et 3, chaque séparateur 70 est sous forme de feuille s'étendant au moins localement parallèlement au plan d'empilement PE.

Comme illustré sur les figures 2 à 4 et 7, l'empilement électrochimique 26 est tel que :
- pour i un entier naturel allant de 1 à N-1 :
   - une i-ième électrode plane de deuxième polarité 50 est empilée sur une i-ième électrode plane de première polarité 30 selon la direction d'empilement DE, un séparateur 70 étant intercalé entre l'i-ème électrode plane de première polarité 30 et l'i-ième électrode plane de deuxième polarité 50 ;
   - une i+1-ième électrode plane de première polarité 30 est empilée sur l'i-ième électrode plane de deuxième polarité 50 selon la direction d'empilement DE, un séparateur 70 étant intercalé entre l'i-ème électrode plane de deuxième polarité 50 et l'i+1-ième électrode plane de première polarité 30 ;
- une N-ième électrode plane de deuxième polarité 50 est empilée sur la N-ième électrode plane de première polarité 30 selon la direction d'empilement DE, un séparateur 70 étant intercalé entre la N-ième électrode plane de première polarité 30 et la N-ième électrode plane de deuxième polarité 50.

Avantageusement, un séparateur 70 est empilé sur la N-ième électrode plane de deuxième polarité 50 de l'empilement électrochimique 26 selon la direction d'empilement DE.

Avantageusement, l'empilement électrochimique 26 comprend 2N-1 groupes de capacité électrochimique 80, de sorte que pour j un entier naturel allant de 1 à N-1 :
- la j-ième électrode plane de première polarité 30 et la j-ième électrode plane de deuxième polarité 50 forment un groupe de capacité électrochimique 80 ;
- la j-ième électrode plane de deuxième polarité 50 et la j+1-ième électrode plane de première polarité 30 forment un groupe de capacité électrochimique 80.

La N-ième électrode plane de première polarité 30 et la N-ième électrode plane de deuxième polarité 50 forment un groupe de capacité électrochimique 80.

Notamment, la capacité électrochimique de l'empilement électrochimique 26 correspond à la somme des capacités électrochimiques des 2N-1 groupes de capacité électrochimiques 80.

En particulier, chaque groupe de capacité électrochimique 80 est tel qu'un ensemble de réactions d'oxydo-réduction est destiné à avoir lieu entre les électrodes planes de première et deuxième polarités 30, 50 correspondantes dudit groupe de capacité électrochimique 80.

Notamment, pour chaque groupe de capacité électrochimique 80, un ensemble de réactions d'oxydo-réduction électrochimique est destiné à avoir lieu entre les première et deuxième couches électrochimiquement actives 36, 56 se faisant face des électrodes planes de première et deuxième polarités 30, 50 correspondantes dudit groupe de capacité électrochimique 80. En particulier, pour chaque groupe de capacité électrochimique 80, les réactions d'oxydo-réduction électrochimique correspondantes sont représentatives d'une quantité de charge électrique fournie ou consommée associée.

Avantageusement, pour p un entier naturel allant de 1 à M-1, le p+1-ième empilement électrochimique 26 est empilé sur le p-ième empilement électrochimique 26 selon la direction d'empilement DE de sorte que la 1-ière électrode plane de première polarité 30 du p+1-ième empilement électrochimique 26 est empilée sur le séparateur 70 qui est lui-même empilé sur la N-ième électrode plane de deuxième polarité 50 du p-ième empilement électrochimique 26.

Encore avantageusement, pour p allant de 1 à M-1, la N-ième électrode plane de deuxième polarité 50 du p-ième empilement électrochimique 26 et la 1-ière électrode plane de première polarité 30 du p+1-ième empilement électrochimique 26 forment un groupe de capacité électrochimique 80.

Encore avantageusement, le M-ième empilement électrochimique 26 comprend N+1 électrodes de première polarité 30, la N-ième électrode plane de deuxième polarité 50 et la N+1-ième électrode plane de première polarité 30 formant un groupe de capacité électrochimique 80, l'empilement électrochimique 26 comprenant alors 2N groupes de capacité électrochimique 80.

Pour k un entier naturel allant de 1 à N :
- une k-ième borne de connexion électrique de première polarité 90 est formée par une k-ième languette de connexion électrique de première polarité 38 de la k-ième électrode plane de première polarité 30 de l'empilement électrochimique 26 ;
- une k-ième borne de connexion électrique de deuxième polarité 92 est formée par une k-ième languette de connexion électrique de deuxième polarité 58 de la k-ième électrode plane de deuxième polarité 50 de l'empilement électrochimique 26.

En particulier, comme illustré sur les figures 3 et 5 à 7, les N bornes de connexion électrique de première polarité 90 sont alignées successivement le long du premier bord 26A de l'empilement électrochimique 26, les N bornes de connexion électrique de deuxième polarité 92 étant alignées successivement le long du deuxième bord 26B de l'empilement électrochimique 26.

Avantageusement, pour q un entier naturel allant de 1 à N :
- la q-ième borne de connexion électrique de première polarité 90 est formée par l'ensemble des q-ième languettes de connexion électrique de première polarité 38 des q-ième électrodes planes de première polarité 30 des M empilements électrochimiques 26 ;
- la q-ième borne de connexion électrique de deuxième polarité 92 est formée par l'ensemble des q-ième languettes de connexion électrique de deuxième polarité 58 des q-ième électrodes planes de deuxième polarité 50 des M empilements électrochimiques 26.

Encore avantageusement, comme illustré sur la figure 3, pour chaque borne de connexion électrique de première 90 ou de deuxième 92 polarité, les languettes correspondant à ladite borne de connexion électrique de première 90 ou de deuxième 92 polarité sont soudées les unes aux autres pour former ladite borne de connexion électrique de première 90 ou de deuxième 92 polarité.

Encore avantageusement, chaque borne de connexion électrique de première polarité 90 est connectée électriquement à un connecteur de première polarité (non-illustré) de l'élément électrochimique 20 et chaque borne de connexion électrique de deuxième polarité 92 est connectée électriquement à un connecteur de deuxième polarité (non-illustré) de l'élément électrochimique 20.

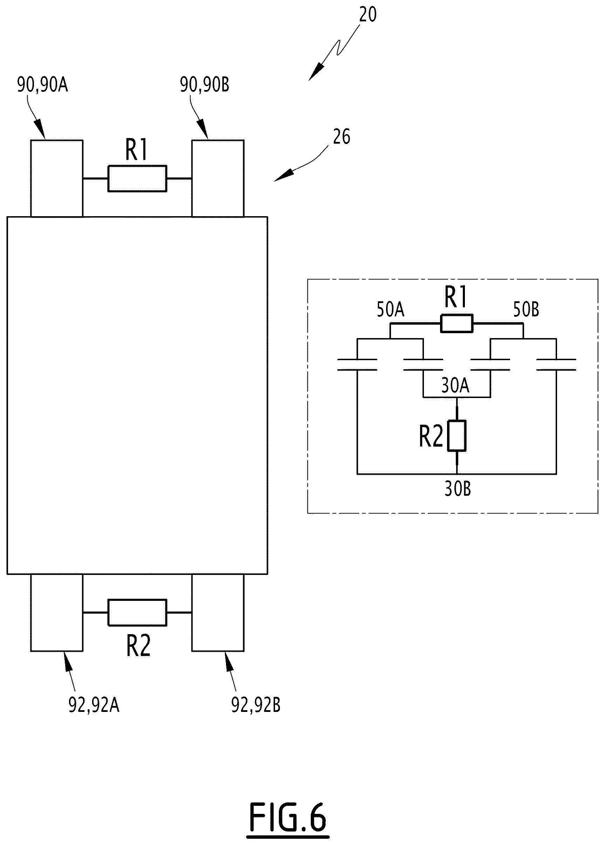

Encore avantageusement, comme illustré sur les figures 6 et 7 :
- chaque borne de connexion électrique de première polarité 90 est reliée électriquement à la(aux) bornes(s) de connexion électrique de première polarité voisine(s) 90 par une première résistance R1 ;
- chaque borne de connexion électrique de deuxième polarité 92 est reliée électriquement à la(aux) borne(s) de connexion électrique de deuxième polarité voisine(s) 92 par une deuxième résistance R2.

Notamment :
- chaque borne de connexion électrique de première polarité 90 est connectée électriquement en parallèle à la(aux) borne(s) de connexion électrique de première polarité voisine(s) 90 par une première résistance R1 ;
- chaque borne de connexion électrique de deuxième polarité 92 est connectée électriquement en parallèle à la(aux) borne(s) de connexion électrique de deuxième polarité voisine(s) 92 par une deuxième résistance R2.

Les première et deuxième résistances R1, R2 présentent une valeur de résistance électrique adaptée de sorte qu'en cas de court-circuit entre une électrode de première polarité 30 et une électrode de deuxième polarité 50, le déchargement de l'élément électrochimique 20 corresponde à un régime de courant :
- entre 10 C et 30 C, pour un élément électrochimique de charge électrique supérieure à 10 A·h ;
- entre C/3 et 3 C, pour un élément électrochimique de charge électrique inférieure à 10 A·h ;

C étant la capacité nominale de l'élément électrochimique 20.

Grâce à ces résistances, les groupes de capacité électrochimique 80 qui sont en parallèle du groupe de capacité électrochimique 80 subissant le court-circuit vont pouvoir se décharger tout en réduisant le risque d'une surchauffe de l'élément électrochimique 20.

Avantageusement, pour les éléments électrochimiques 20 ayant une charge électrique faible (par exemple inférieure ou égale à 10A·h), les valeurs de résistance électrique sont adaptées de sorte à limiter l'énergie du court-circuit et contenir le défaut électrique pour éviter tout emballement thermique.

Encore avantageusement, pour les éléments électrochimiques 20 ayant une charge électrique élevée (par exemple supérieure à 10A·h), les valeurs de résistance électrique sont adaptées de sorte à décharger les autres groupes de capacité électrochimique avant qu'un emballement thermique n'ait lieu.

Selon un exemple particulier, les valeurs de résistance électrique des première et deuxième résistances R1 et R2 sont égales.

De préférence, l'électrolyte est solide. Grâce à l'utilisation d'un électrolyte solide, la séparation entre les différents groupes de capacité électrochimique 80 est améliorée. En d'autres termes, l'indépendance entre les différents groupes de capacité électrochimique 80 est améliorée.

Selon une variante, l'électrolyte est liquide et le faisceau électrochimique 22 est immergé au moins partiellement dans l'électrolyte 97.

Dans l'exemple des figures 2 et 3, on a illustré un élément électrochimique 20 selon le premier mode de réalisation, dans lequel N est égal à 2 et M est égal à 3. Ainsi, dans cet exemple, chaque empilement électrochimique 26 comprend 2 électrodes de première polarité 30A, 30B, 2 électrodes de deuxième polarité 50A, 50B et 4 séparateurs 70 et le faisceau électrochimique 22 comprend 3 empilements électrochimiques 26.

Sur la figure 3, sont illustrées en outre des soudures 94 connectant les languettes correspondant à la borne de connexion électrique de première 90 ou de deuxième 92 polarité pour former ladite borne de connexion électrique de première 90 ou de deuxième 92 polarité.

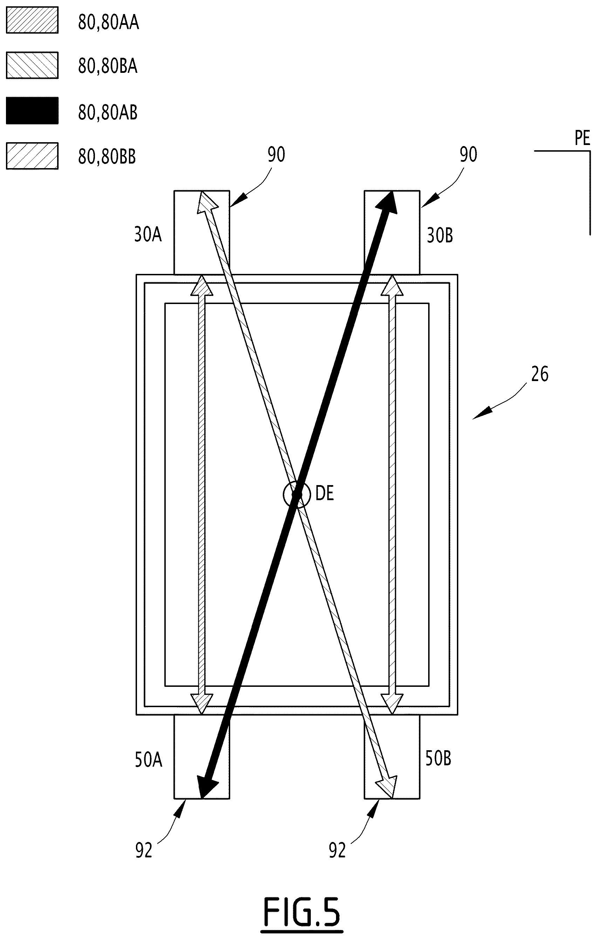

Dans l'exemple des figures 4 et 5, on a illustré un élément électrochimique 20 selon le premier mode de réalisation, dans lequel N est égal à 2 et M est égal à 2. Ainsi, dans cet exemple, chaque empilement électrochimique 26 comprend 2 électrodes de première polarité 30A, 30B, 2 électrodes de deuxième polarité 50A, 50B et 4 séparateurs 70 et le faisceau électrochimique 22 comprend 2 empilements électrochimiques 26.

Dans l'exemple des figures 4 et 5, les séparateurs 70 ont été omis. Sur ces figures, ont été représentés schématiquement les quatre groupes de capacité électrochimiques 80 avec des hachures de types différents et/ou des doubles-flèches.

Parmi ces quatre groupes de capacité électrochimiques 80 :
- un premier groupe de capacité électrochimique 80AA comprend la première électrode plane de première polarité 30A et la première électrode plane de deuxième polarité 50A ;
- un deuxième groupe de capacité électrochimique 80AB comprend la première électrode plane de deuxième polarité 50A et la deuxième électrode plane de première polarité 30B ;
- un troisième groupe de capacité électrochimique 80BB comprend la deuxième électrode plane de première polarité 30B et la deuxième électrode plane de deuxième polarité 50B ;
- un quatrième groupe de capacité électrochimique 80BA comprend la deuxième électrode plane de deuxième polarité 50B et la première électrode plane de première polarité 30A, notamment la première électrode plane de première polarité 30A de l'empilement électrochimique 26 voisin.

Sur la figure 4, les quatre groupes de capacité électrochimiques 80 ont été illustrés par des hachures de types différents sur les couches électrochimiquement actives impliquées dans l'ensemble des réactions d'oxydo-réduction desdits groupes.

Dans l'exemple des figures 6 et 7, on a illustré un élément électrochimique 20 selon le premier mode de réalisation, dans lequel N est égal à 2 et M est égal à 2. Ainsi, dans cet exemple, chaque empilement électrochimique 26 comprend 2 électrodes de première polarité 30, 2 électrodes de deuxième polarité 50 et 4 séparateurs 70 et le faisceau électrochimique 22 comprend 2 empilements électrochimiques 26.

En référence aux figures 6 et 7 :
- la 1-ière borne de connexion électrique de première polarité 90A est reliée électriquement à la 2-ième borne de connexion électrique de première polarité 90B par une première résistance R1 ; et
- la 1-ière borne de connexion électrique de deuxième polarité 92A est reliée électriquement à la 2-ième borne de connexion électrique de deuxième polarité 92B par une deuxième résistance R2.

En partie droite de la figure 6, un schéma électrique correspondant à l'élément électrochimique 20 est illustré.

Sur la figure 7, on a illustré un exemple dans lequel un court-circuit SC a lieu entre la 2-ième borne de connexion électrique de première polarité 90B et la 1-ère borne de connexion électrique de deuxième polarité 92A.

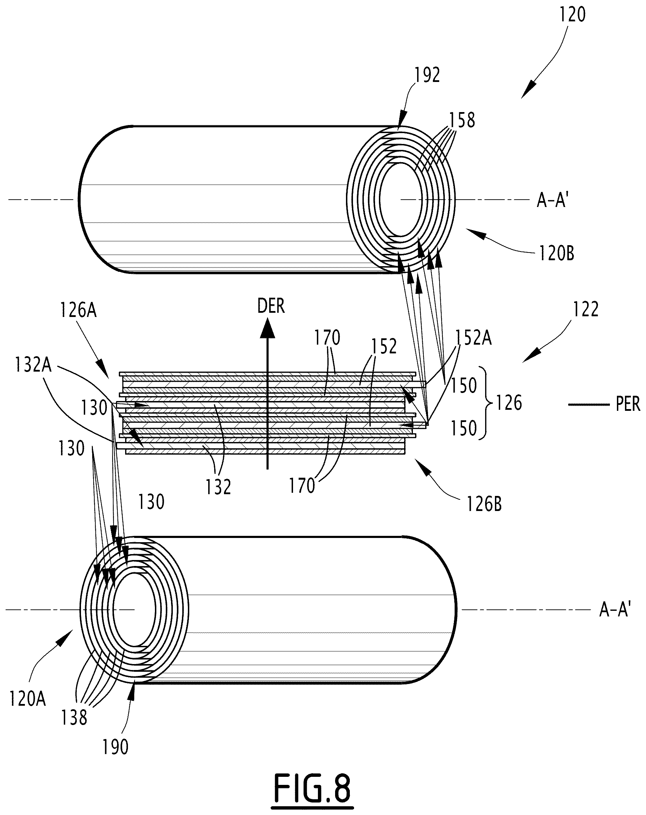

En référence à la figure 8, selon un deuxième mode de réalisation de l'invention, on décrit dans ce qui suit un élément électrochimique 120 selon l'invention.

La figure 8 illustre :
- dans une portion inférieure l'élément électrochimique 120 selon une première perspective dans laquelle une première extrémité 120A de l'élément électrochimique 120 est visible ;
- dans une portion supérieure l'élément électrochimique 120 selon une deuxième perspective dans laquelle une deuxième extrémité 120B de l'élément électrochimique 120 est visible ;
- dans une portion intermédiaire, une coupe selon un plan comprenant un axe de cylindre A-A' de l'élément électrochimique 120 d'une portion de l'empilement électrochimique 126.

Sauf lorsqu'explicitement mentionné autrement, le deuxième mode de réalisation est similaire au premier mode de réalisation.

Selon ce deuxième mode de réalisation, l'élément électrochimique 120 est du type cylindrique.

L'élément électrochimique 120 s'étend sensiblement selon l'axe de cylindre A-A'.

Le faisceau électrochimique 122 comprend un unique empilement électrochimique 126 (en d'autres termes M est égal à 1) enroulé en spirale autour de l'axe de cylindre A-A'.

Dans ce deuxième mode de réalisation, l'empilement électrochimique 126 s'étend au moins localement selon une direction d'empilement DER qui est sensiblement radiale par rapport à l'axe de cylindre A-A'.

Aussi, dans ce deuxième mode de réalisation, les N électrodes de première polarité 130 et les N électrodes de deuxième polarité 150 s'étendent chacune au moins localement parallèlement à un plan d'empilement PER sensiblement orthogonal à la direction d'empilement DER. En d'autres termes, les N électrodes de première polarité 130 et les N électrodes de deuxième polarité 150 s'étendent chacune au moins localement orthoradialement par rapport à l'axe de cylindre A-A'.

Avantageusement:
- chaque languette de connexion électrique de première polarité 138 est formée par un premier bord 132A d'un premier collecteur de courant 132 de l'électrode de première polarité 130 correspondante, agencée le long du premier bord 126A de l'empilement électrochimique 126 ;
- chaque languette de connexion électrique de deuxième polarité 158 est formée par un deuxième bord 152A d'un deuxième collecteur de courant 152 de l'électrode de deuxième polarité 150 correspondante, agencée le long du deuxième bord 126B de l'empilement électrochimique 126.

Selon le deuxième mode de réalisation, par exemple, les N bornes de connexion électrique de première polarité 190 sont agencées à la première extrémité axiale 120A de l'élément électrochimique 120, les N bornes de connexion électrique de deuxième polarité 192 étant agencées à une deuxième extrémité axiale 120B de l'élément électrochimique 120, opposée à la première extrémité axiale 120A selon l'axe de cylindre A-A'.

Sur la partie centrale de la figure 8, on a illustré un exemple dans lequel N est égal à 2 et M est égal à 1. Ainsi, dans cet exemple, l'empilement électrochimique 126 comprend 2 électrodes de première polarité 130, 2 électrodes de deuxième polarité 150 et 4 séparateurs 170 et le faisceau électrochimique 122 comprend un empilement électrochimique 126.

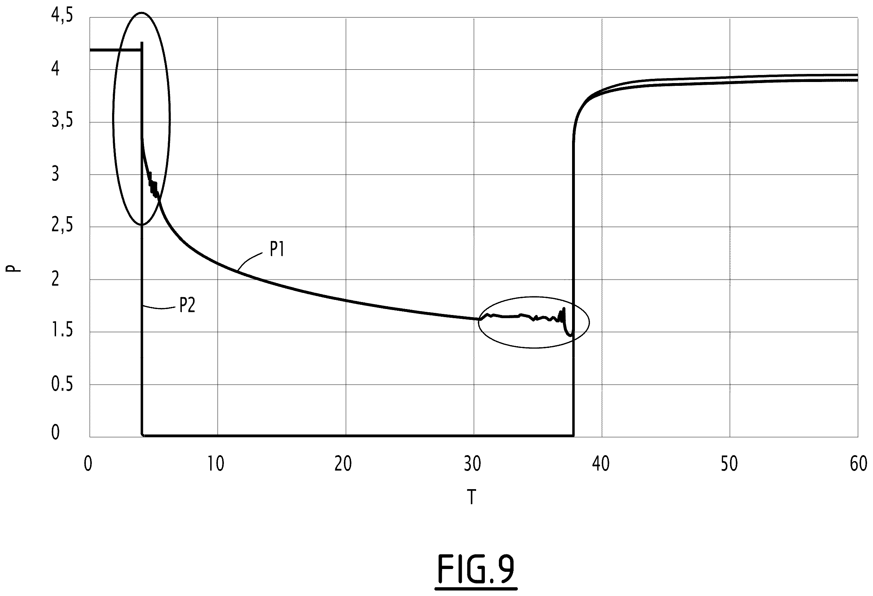

Sur la figure 9, on a illustré une représentation graphique de l'évolution de la tension P1 d'un élément électrochimique 20, 120 et de la tension P2 entre une borne de connexion électrique de première polarité 90, 190 et une borne de connexion électrique de deuxième polarité 92, 192 subissant un court-circuit en fonction du temps T. La tension P (P1, P2) est notamment exprimée en volts et le temps T est exprimé en secondes. Dans cet exemple, la résistance électrique R1, R2 a une valeur de 100 ohm et le court-circuit est maintenu pendant 30 s.

Comme visible sur la figure 9, dès que le court-circuit est réalisé, la tension P2 entre les bornes de connexion électrique subissant le court-circuit SC est nulle mais la tension P1 de l'élément électrochimique 20 chute de 70% après les 30 s de court-circuit.

Les variations de tensions P1, P2 entourées sur la figure 9 correspondent aux perturbations générées par la réalisation et la suppression manuelles du court-circuit.

On décrit également un procédé de fabrication de l'élément électrochimique 20, 120.

Le procédé de fabrication comprend une étape de fourniture des N électrodes de première polarité 30, 130, des N électrodes de deuxième polarité 50, 150 et des 2N séparateurs 70, 170.

Les N électrodes de première polarité 30, 130, les N électrodes de deuxième polarité 50, 150 et les 2N séparateurs sont empilés selon la direction d'empilement DE, DER.

En particulier, lorsque N est égal à 2 et dans la variante spécifique où le deuxième bord 26B est opposé au premier bord 26A :
- les électrodes 30, 130, 50, 150 sont agencées de sorte à ce qu'elles s'étendent parallèlement au plan d'empilement PE, PER et que les languettes 38, 138, 58, 158 s'étendant le long d'un même bord ;
- une première électrode de première polarité 30, 130 est retournée en rotation autour d'un axe transversal de sorte que la languette 38, 138 correspondante s'étend le long d'un bord opposé ;
- une deuxième électrode de première polarité 30, 130 est retournée en rotation autour de l'axe transversal puis autour d'un axe longitudinal de sorte que la languette 38, 138 correspondante s'étend le long d'un bord opposé ;
- une première électrode de deuxième polarité 50, 150 est maintenue en position ;
- une deuxième électrode de deuxième polarité 50, 150 est retournée en rotation autour de l'axe longitudinal.

Les deux électrodes 30, 130, les deux électrodes 50, 150 et les 4 séparateurs sont ensuite empilés selon la direction DE, DER.

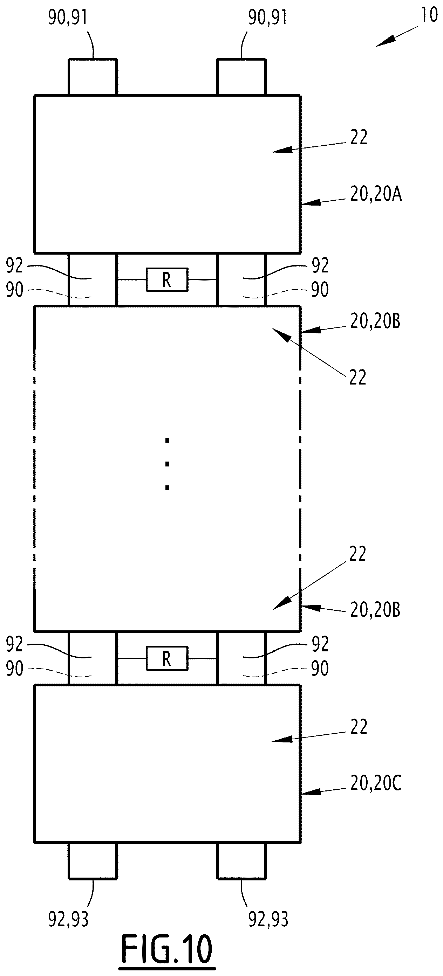

En référence à la figure 10, par exemple, dans les premier et deuxième modes de réalisation, la batterie 10 comprend une pluralité d'éléments électrochimiques 20, chaque élément électrochimique 20 comportant un faisceau électrochimique 22, notamment un seul faisceau électrochimique 22.

En particulier, la batterie 10 comprend deux éléments électrochimiques d'extrémité 20, 20A, 20C et une pluralité d'éléments électrochimiques intermédiaires 20, 20B.

Dans l'exemple de la figure 10, les éléments électrochimiques 20 sont connectés en série. Notamment, pour chaque élément électrochimique intermédiaire 20, 20B, chacune des N bornes de connexion électrique de première polarité 90 correspondantes est connectée électriquement à une des N bornes de connexion électrique de deuxième polarité 92 d'un élément électrochimique 20 adjacent. De même, pour chaque élément électrochimique intermédiaire 20, 20B, chacune des N bornes de connexion électrique de deuxième polarité 92 correspondantes est connectée électriquement à une des N bornes de connexion électrique de première polarité 90 d'un élément électrochimique 20 adjacent. Bien entendu, l'invention ne se limite pas à une connexion en série et il pourrait être envisagé de connecter les éléments électrochimiques 20 en parallèle.

Dans l'exemple de la figure 10, les N bornes de connexion électrique de première polarité 90 de l'élément électrochimique d'extrémité 20A forment des terminaux 91 séparés de connexion à une charge externe (non-illustrée) et les N bornes de connexion électrique de deuxième polarité 92 de l'élément électrochimique d'extrémité 20C forment des terminaux 93 séparés de connexion à la charge externe. Ainsi, dans l'exemple de la figure 10, chacun des empilements électrochimiques 22 des éléments électrochimiques d'extrémité 20A, 20C ne comprennent que 2 groupes de capacité électrochimique 80.

Toujours en référence à la figure 10, par exemple, les 2N bornes de connexion électriques 90, 92 reliant électriquement :
- deux éléments électrochimiques intermédiaires 20, 20B ;
- l'élément électrochimique d'extrémité 20, 20A et un élément électrochimique intermédiaire 20, 20B ; ou
- l'élément électrochimique d'extrémité 20, 20C et un élément électrochimique intermédiaire 20, 20B ;
sont connectées électriquement entre elles par une résistance R, R1, R2.

En particulier, les 2N bornes de connexion électriques 90, 92 reliant électriquement :
- l'élément électrochimique d'extrémité 20, 20A et un élément électrochimique intermédiaire 20, 20B ; ou
- l'élément électrochimique d'extrémité 20, 20C et un élément électrochimique intermédiaire 20, 20B ;
sont connectées électriquement entre elles par une résistance R.

Avantageusement, les 2N bornes de connexion électriques 90, 92 reliant électriquement deux éléments électrochimiques intermédiaires 20, 20B sont connectées électriquement entre elles par une résistance R1, R2.

Par exemple, en référence à la figure 10, la valeur de la résistance électrique des résistances R est sensiblement égale à celle de la première résistances R1 ou celle de la deuxième résistance R2.

Dans un exemple particulier, les valeurs de résistance électrique des résistances R, R1 et R2 sont sensiblement égales.

Toujours en référence à la figure 10, par exemple, les N bornes de connexion électrique de première polarité 90 de l'élément électrochimique d'extrémité 20A ne sont pas connectées électriquement entre elles par une résistance R, R1 et les N bornes de connexion électrique de deuxième polarité 92 de l'élément électrochimique d'extrémité 20C ne sont pas connectées électriquement entre elles par une résistance R, R2.

Grâce à l'invention, la quantité de charge électrique fournie par l'ensemble des réactions d'oxydo-réduction ayant lieu dans l'élément électrochimique est répartie sur une pluralité de bornes de connexion électrique. Cette architecture permet de minimiser l'effet d'un défaut impactant l'aspect électrique ou électrochimique entre une électrode de première polarité et une électrode de deuxième polarité sur les autres électrodes de première ou de deuxième polarité et/ou entre une borne de connexion électrique de première polarité et une borne de connexion électrique de deuxième polarité sur les autres bornes de connexion électrique de première polarité et les autres bornes de connexion électrique de deuxième polarité. La fiabilité et la sécurité de l'élément électrochimique sont améliorées.

La connexion de chaque borne de connexion électrique de première polarité à la(aux) borne(s) de connexion électrique de première polarité voisine(s) par une première résistance et de chaque borne de connexion électrique de deuxième polarité à la(aux) borne(s) de connexion électrique de deuxième polarité voisine(s) par une deuxième résistance améliore davantage la fiabilité et la sécurité de l'élément électrochimique. Dans chaque empilement électrochimique, lorsqu'un court-circuit a lieu dans un groupe de capacité électrochimique, les résistances permettent de contrôler le courant généré par les 2N-2 autres groupes de capacité électrochimique.

Ainsi :
- l'énergie électrique non-contrôlée issue du court-circuit est divisée par 2N-1 ;
- la génération de chaleur en interne (par effet Joule) est limitée à un groupe de capacité électrochimique parmi les 2N-1 groupes de capacité électrochimique ;
- les 2N-2 autres groupes de capacité électrochimique se déchargent dans les résistances.

## Revendications

1. Elément électrochimique (20 ; 120) comprenant un faisceau électrochimique (22 ; 122),
le faisceau électrochimique (22 ; 122) comportant au moins un empilement électrochimique (26 ; 126) s'étendant au moins localement selon une direction d'empilement (DE ; DER), l'au moins un empilement électrochimique (26 ; 126) comprenant :
- N électrodes d'une première polarité (30 ; 130), sous forme de premières feuilles, s'étendant chacune au moins localement parallèlement à un plan d'empilement (PE ; PER) sensiblement orthogonal à la direction d'empilement (DE ; DER) et comportant chacune une languette de connexion électrique de première polarité (38 ; 138) ;
- N électrodes d'une deuxième polarité (50 ; 150) opposée à la première polarité, sous forme de deuxièmes feuilles, s'étendant chacune au moins localement parallèlement au plan d'empilement (PE ; PER) et comportant chacune une languette de connexion électrique de deuxième polarité (58 ; 158) ;
- 2N séparateurs (70 ; 170) ;
N étant un entier naturel,
l'au moins un empilement électrochimique (26 ; 126) étant tel que :
- pour i un entier naturel allant de 1 à N-1 :
- une i-ième électrode plane de deuxième polarité (50 ; 150) est empilée sur une i-ième électrode plane de première polarité (30 ; 130) selon la direction d'empilement (DE ; DER), un séparateur (70 ; 170) étant intercalé entre l'i-ème électrode plane de première polarité (30 ; 130) et l'i-ième électrode plane de deuxième polarité (50 ; 150) ;
- une i+1-ième électrode plane de première polarité (30 ; 130) est empilée sur l'i-ième électrode plane de deuxième polarité (50 ; 150) selon la direction d'empilement (DE ; DER), un séparateur (70 ; 170) étant intercalé entre l'i-ème électrode plane de deuxième polarité (50 ; 150) et l'i+1-ième électrode plane de première polarité (30 ; 130) ;
- une N-ième électrode plane de deuxième polarité (50 ; 150) est empilée sur la N-ième électrode plane de première polarité (30 ; 130) selon la direction d'empilement (DE ; DER), un séparateur (70 ; 170) étant intercalé entre la N-ième électrode plane de première polarité (30 ; 130) et la N-ième électrode plane de deuxième polarité (50 ; 150) ;
**caractérisé en ce que** le faisceau électrochimique (22 ; 122) comprend :
- N bornes de connexion électrique de première polarité (90 ; 190) agencées le long d'un premier bord (26A ; 126A) de l'au moins un empilement électrochimique (26 ; 126) ;
- N bornes de connexion électrique de deuxième polarité (92 ; 192) agencées le long d'un deuxième bord (26B ; 126B) de l'au moins un empilement électrochimique (26 ; 126) ;
l'élément électrochimique (20) étant tel que :
pour k un entier naturel allant de 1 à N :
- une k-ième borne de connexion électrique de première polarité (90 ; 190) est formée par une k-ième languette de connexion électrique de première polarité (38 ; 138) de la k-ième électrode plane de première polarité (30 ; 130) de l'au moins un empilement électrochimique (26 ; 126) ;
- une k-ième borne de connexion électrique de deuxième polarité (92 ; 192) est formée par une k-ième languette de connexion électrique de deuxième polarité (58 ; 158) de la k-ième électrode plane de deuxième polarité (50 ; 150) de l'au moins un empilement électrochimique (26 ; 126).

2. Elément électrochimique (20 ; 120) selon la revendication 1, dans lequel l'au moins un empilement électrochimique (26 ; 126) comprend 2N-1 groupes de capacité électrochimique (80), de sorte que pour j un entier naturel allant de 1 à N-1 :
- la j-ième électrode plane de première polarité (30 ; 130) et la j-ième électrode plane de deuxième polarité (50 ; 150) forment un groupe de capacité électrochimique (80) ;
- la j-ième électrode plane de deuxième polarité (50 ; 150) et la j+1-ième électrode plane de première polarité (30 ; 130) forment un groupe de capacité électrochimique (80) ;
la N-ième électrode plane de première polarité (30 ; 130) et la N-ième électrode plane de deuxième polarité (50 ; 150) formant un groupe de capacité électrochimique (80) ;
la capacité électrochimique de l'au moins un empilement électrochimique (26 ; 126) correspondant à la somme des capacités électrochimiques des 2N-1 groupes de capacité électrochimiques (80).

3. Elément électrochimique (20 ; 120) selon la revendication 2, dans lequel chaque groupe de capacité électrochimique (80) est tel qu'un ensemble de réactions d'oxydo-réduction est destiné à avoir lieu entre les électrodes planes de première (30 ; 130) et deuxième (50 ; 150) polarités correspondantes dudit groupe de capacité électrochimique (80).

4. Elément électrochimique (20) selon l'une quelconque des revendications précédentes, dans lequel l'élément électrochimique (20) est du type prismatique ou pochette, le faisceau électrochimique (22) s'étendant sensiblement selon le plan d'empilement (PE).

5. Elément électrochimique (20) selon la revendication 4, dans lequel le faisceau électrochimique (22) comprend M empilements électrochimiques (26), M étant un entier naturel, et
dans lequel pour chaque empilement électrochimique (26), un séparateur (70) est empilé sur la N-ième électrode plane de deuxième polarité (50) dudit empilement électrochimique (26) selon la direction d'empilement (DE),
l'élément électrochimique (20) étant tel que pour p un entier naturel allant de 1 à M-1 :
le p+1-ième empilement électrochimique (26) est empilé sur le p-ième empilement électrochimique (26) selon la direction d'empilement (DE) de sorte que la 1-ière électrode plane de première polarité (30) du p+1-ième empilement électrochimique (26) est empilée sur le séparateur (70) qui est lui-même empilé sur la N-ième électrode plane de deuxième polarité (50) du p-ième empilement électrochimique (26).

6. Elément électrochimique (20) selon la revendication 4 ou 5, dans lequel les N bornes de connexion électrique de première polarité (90) sont alignées successivement le long du premier bord (26A) de l'au moins un empilement électrochimique (26), les N bornes de connexion électrique de deuxième polarité (92) étant alignées successivement le long du deuxième bord (26B) de l'au moins un empilement électrochimique (26), chaque languette de connexion électrique de première (38) ou de deuxième (58) polarité s'étendant en saillie depuis un collecteur de courant (32, 52) de l'électrode correspondante.

7. Elément électrochimique (20) selon la revendication 6, dans lequel pour q un entier naturel allant de 1 à N :
- la q-ième borne de connexion électrique de première polarité (90) est formée par l'ensemble des q-ième languettes de connexion électrique de première polarité (38) des q-ième électrodes planes de première polarité (30) des M empilements électrochimiques (26) ;
- la q-ième borne de connexion électrique de deuxième polarité (92) est formée par l'ensemble des q-ième languettes de connexion électrique de deuxième polarité (58) des q-ième électrodes planes de deuxième polarité (50) des M empilements électrochimiques (26).

8. Elément électrochimique (20) selon la revendication 7, dans lequel pour chaque borne de connexion électrique de première (90) ou de deuxième (92) polarité, les languettes correspondant à ladite borne de connexion électrique de première (90) ou de deuxième (92) polarité sont soudées les unes aux autres pour former ladite borne de connexion électrique de première (90) ou de deuxième (92) polarité.

9. Elément électrochimique (120) selon l'une quelconque des revendications 1 à 3, dans lequel l'élément électrochimique (120) est du type cylindrique, l'élément électrochimique (120) s'étendant sensiblement selon un axe de cylindre (A-A'), le faisceau électrochimique (122) comprenant un unique empilement électrochimique (126) enroulé en spirale autour de l'axe de cylindre (A-A').

10. Elément électrochimique (120) selon la revendication 9, dans lequel :
- chaque languette de connexion électrique de première polarité (138) est formée par un premier bord (132A) d'un collecteur de courant (132) de l'électrode de première polarité (130) correspondante, agencée le long du premier bord (126A) de l'empilement électrochimique (126) ;
- chaque languette de connexion électrique de deuxième polarité (158) est formée par un deuxième bord (152A) d'un collecteur de courant (152) de l'électrode de deuxième polarité (150) correspondante, agencée le long du deuxième bord (126B) de l'empilement électrochimique (126).

11. Elément électrochimique (120) selon la revendication 10, dans lequel les N bornes de connexion électrique de première polarité (190) sont agencées à une première extrémité axiale (120A) de l'élément électrochimique (120), les N bornes de connexion électrique de deuxième polarité (192) étant agencées à une deuxième extrémité axiale (120B) de l'élément électrochimique (120), opposée à la première extrémité axiale (120A).

12. Elément électrochimique (20 ; 120) selon l'une quelconque des revendications précédentes, dans lequel :
- chaque borne de connexion électrique de première polarité (90 ; 190) est reliée électriquement à la(aux) borne(s) de connexion électrique de première polarité voisine(s) (90 ; 190) par une première résistance (R1) ;
- chaque borne de connexion électrique de deuxième polarité (92 ; 192) est reliée électriquement à la(aux) borne(s) de connexion électrique de deuxième polarité voisine(s) (92 ;192) par une deuxième résistance (R2).

13. Elément électrochimique (20 ; 120) selon l'une quelconque des revendications précédentes, dans lequel l'élément électrochimique (120) comprend un conteneur (96) délimitant un volume interne (98) dans lequel le faisceau électrochimique (22 ; 122) est reçu, l'élément électrochimique (20 ; 120) comprenant en outre un électrolyte (97) contenu dans le volume interne (98).

14. Elément électrochimique (20 ; 120) selon la revendication 13, dans lequel l'électrolyte est solide.

15. Batterie (10) comprenant au moins un élément électrochimique (20 ; 120) selon l'une quelconque des revendications précédentes.
